# EUROPEAN PATENT APPLICATION

(11) **EP 4 000 558 A1**
(43) Date of publication of application: **25.05.2022**
(21) Application number: 20208602.1
(22) Date of filing: 19.11.2020
(51) Int. Cl.: A61C 17/22, A46B 15/00

(54) **ORAL CARE ASSEMBLY AND METHOD OF OPERATING THE SAME**

(71) Applicant: Koninklijke Philips N.V., 5656 AG Eindhoven (NL)
(72) Inventor: VAN HULTEN, Maaike Cornelia Johanna Wilhelmina, 5656 AE Eindhoven (NL); JOHNSON, Mark Thomas, 5656 AE Eindhoven (NL); GOTTENBOS, Bart, 5656 AE Eindhoven (NL); GERHARDT, Lutz Christian, 5656 AE Eindhoven (NL); BORN, Matthias, 5656 AE Eindhoven (NL)
(74) Representative: Philips Intellectual Property & Standards

(57) **Abstract**

Provided is an oral care assembly (10) comprising an oral care device (12) for inserting into a subject's oral cavity. The oral care assembly comprises at least one powered element (16) adapted to inactivate microorganisms and/or viruses. The oral care assembly includes a control arrangement (18) for controlling the at least one powered element. The control arrangement is configurable to control the at least one powered element to operate in a first mode and a second mode. In the first mode, the at least one powered element is controlled by the control arrangement to inactivate microorganisms and/or viruses within the oral cavity when the oral care device is inserted into the oral cavity. In the second mode, the at least one powered element is controlled by the control arrangement to inactivate microorganisms and/or viruses on the oral care device when the oral care device is not inserted into the subject's oral cavity. Further provided is a method of operating the oral care assembly.

## Description

### FIELD OF THE INVENTION

This invention relates to an oral care assembly, such as a mouthpiece assembly or a toothbrush assembly, comprising an oral care device, such as a mouthpiece or a toothbrush head, and a powered element for inactivating microorganisms and/or viruses. The invention further relates to a method of operating the oral care assembly.

### BACKGROUND OF THE INVENTION

Various oral care devices are known, such as toothbrush heads, dental instruments, e.g. as used by dentists and oral hygienists, and mouthpieces, for inserting into a subject's oral cavity.

Mouthpieces, for instance, may be employed for various oral applications, such as tooth cleaning, teeth alignment, etc. Such mouthpieces may, in particular, be used for reducing dental plaque. Brushing mouthpiece are, for example, known to assist in removing dental plaque, and offer time saving benefits over brushing using a toothbrush.

Even in the case of brushing mouthpieces, dental plaque removal capability may be limited due to the bristles being unable to move properly or being unable to reach surfaces of the teeth sufficiently extensively for effective cleaning.

The mouthpiece may be cleaned after each use by, for example, brushing the mouthpiece and rinsing it under tap water. The user may, however, find this activity unpleasant and inconvenient. Additionally, bacteria may thrive in the mouthpiece after rinsing, and grow to unhealthy levels. This problem may be particularly pronounced for brushing mouthpieces, which are more difficult to clean due to having multiple brushing surfaces arranged relative to each other, and where bacteria may easily reside for relatively long durations, and grow between the bristles.

Such contamination may also pose similar difficulties for other oral care devices, such as toothbrush heads and dental instruments.

### SUMMARY OF THE INVENTION

The invention is defined by the independent claims. The dependent claims define advantageous embodiments.

According to an aspect there is provided an oral care assembly comprising: an oral care device for inserting into a subject's oral cavity; at least one powered element adapted to inactivate microorganisms and/or viruses; and a control arrangement for controlling the at least one powered element, wherein the control arrangement is configurable to control the at least one powered element to operate in: a first mode when the oral care device is inserted into the subject's oral cavity, the at least one powered element being controlled by the control arrangement in the first mode to inactivate microorganisms and/or viruses within the oral cavity; and a second mode when the oral care device is not inserted into the subject's oral cavity, the at least one powered element being controlled by the control arrangement in the second mode to inactivate microorganisms and/or viruses on the oral care device.

The present invention is based on the realisation that the inactivation of microorganisms and/or viruses provided by the at least one powered element can improve cleaning inside the oral cavity, and furthermore can be employed for sanitizing or disinfecting or sterilising the oral care device when it is not inserted into the oral cavity, e.g. between uses of the oral care assembly. To this end, the control arrangement included in the oral care assembly is configurable, e.g. switchable, to adopt the first mode when the oral care device is inserted into the oral cavity for inactivation of microorganisms and/or viruses therein, and to adopt the second mode when the oral care device is not inserted into the subject's oral cavity, e.g. between uses of the oral care assembly. In the second mode, the at least one powered element is controlled to inactivate microorganisms and/or viruses on the oral care device. This may assist to limit or prevent such microorganisms growing and/or viruses residing on the oral care device between uses.

The term "sanitizing" may, for example, refer to a log 3 reduction, and the term "disinfecting" may, for example, refer to a log 6 reduction in the colony forming unit of the pathogen in question, although the term "disinfecting" as used herein is intended to encompass disinfecting, sanitizing and even sterilizing.

The oral care assembly may comprise a holder for the oral care device when the oral care device is not inserted into the subject's oral cavity. The holder may provide a convenient and in at least some examples hygienic, way of storing/stowing the oral care device between uses.

When the oral care assembly comprises such a holder, the control arrangement may be configured to determine that the oral care device is being held using the holder, and control the at least one powered element to operate in the second mode based on the determination that the oral care device is being held using the holder. Thus, the second mode may be conveniently triggered by use of the holder to hold the oral care device, e.g. after use.

The term "microorganisms" as used herein is intended to encompass cellular microorganisms. The term "viruses" as used herein is intended to encompass acellular microorganisms.

In an embodiment, the control arrangement is configured to control the at least one powered element to inactivate microorganisms and/or viruses using a first energy (or power density or energy density) in the first mode, and using a second energy in the second mode, wherein the first energy and the second energy are different from each other. The respective energies of the first and second modes may thus be tailored according to whether or not the oral care device is inserted into the subject's oral cavity.

The second energy may, for instance, be higher than the first energy. The higher second energy, or power density, i.e. the energy transfer per unit area, or energy density, i.e. power per area multiplied by the duration of application, in this example may assist inactivation of microorganisms and/or viruses on the oral care device in the second mode. The lower first energy may balance user comfort and safety requirements with effective in-mouth inactivation of microorganisms and/or viruses.

The at least one powered element may comprise a pair of electrodes, and the control arrangement may be configured to apply a voltage across the pair of electrodes; the voltage being sufficient to electrochemically generate an antimicrobial from an aqueous solution between the electrodes and/or from a material included in at least one of the electrodes.

Applying the voltage may induce an electrochemical reaction resulting in the production of antimicrobials. Such antimicrobials may assist to inactivate, e.g. destroy, bacteria causing dental plaque in the first mode. The electrochemically-generated antimicrobials may further assist to disinfect the oral care device in the second mode.

The voltage may, in certain examples, be sufficient to electrolyse the aqueous solution to produce the antimicrobial. For example, the aqueous solution may comprise sodium chloride, and the antimicrobial may comprise chlorine. Chlorine, which when dissolved in water may form hypochlorous acid, may be an effective antimicrobial. Alternatively or additionally, the material may, for instance, be a metal selected from zinc, tin, copper and/or silver. Such a metal may be electrochemically oxidised to generate antimicrobial metal ions.

Alternatively or additionally, the at least one powered element may comprise a heating and/or cooling element, such as a Peltier element, and the control arrangement may be configured to control the heating and/or cooling element to provide heating and/or cooling at least to a surface of the oral cavity in the first mode, and to provide heating and/or cooling to the oral care device in the second mode.

The temperature(s) resulting from the heating and/or cooling may, for instance, assist to damage microorganisms and/or viruses, and, in relation to bacteria, inactivate bacterial enzymes and toxins. Such temperature-based inactivation of microorganisms and/or viruses may be usefully applied to inactivate oral bacteria in the first mode, and to inactivate microorganisms and/or viruses on the oral care device in the second mode.

In the second mode, the heating may also be used to dry the oral care device after cleaning/rinsing to assist to, for example, limit or avoid growth of fungus.

The control arrangement may, for example, be configured to control the heating and/or cooling element to provide pulses of heating at least to the surface of the oral cavity in the first mode. Such pulsing may assist the surface to reach a sufficiently high temperature for inactivation of microorganisms, e.g. bacteria, and/or viruses relatively quickly, whilst also minimising the risk of damage to the centres of dental pieces, e.g. teeth.

In an embodiment, the control arrangement is configured such that a maximum temperature at the surface, e.g. tooth surface, to which heating is applied is 60°C or less. This may assist to reduce the risk of discomfort or injury to the subject during operation of the oral care assembly in the first mode.

Alternatively or additionally, the at least one powered element may comprise a first electrode and a second electrode, the oral care device may comprise a dielectric barrier, and the control arrangement may comprise a voltage supply. In this case, the dielectric barrier and the control arrangement are configured such that a dielectric barrier discharge is generated by application of a voltage across the first and second electrodes by the voltage supply.

The dielectric barrier discharge may generate a cold plasma, and the cold (atmospheric) plasma may effect inactivation of microorganisms and/or viruses, e.g. by killing bacteria, relatively quickly. One or more by-products may also generated by the dielectric barrier discharge, e.g. hydroxide, nitric oxide and/or ozone, which by-products may also have an antimicrobial effect. The cold plasma and/or the by-products may inactivate, e.g. kill, oral bacteria during operation in the first mode, and microorganisms, e.g. bacteria and fungi, and/or viruses on the oral care device in the second mode.

The second electrode may, for example, comprise a conductor comprising conductive areas spaced apart from each other, and the dielectric barrier discharge may be generated in the spaces between the conductive areas. In such a configuration the plasma may be contained relatively close to the dielectric barrier, and the species created in the plasma may be transported to the site of treatment in the oral cavity or the site of sanitization on the oral care device via, for example, forced or natural convection.

Alternatively or additionally, the at least one powered element comprises at least one light source for emitting light for inactivating microorganisms and/or viruses, wherein the at least one light source is arranged to emit the light into the oral cavity in the first mode, and emit the light towards at least part of the oral care device in the second mode.

The at least one light source may assist to lower plaque levels in the oral cavity when the oral care assembly is operated in the first mode. Moreover, irradiation of the oral care device using the at least one light source in the second mode may make the oral care device more hygienic for subsequent uses, and as a consequence assist to improve oral health.

The oral care device may comprise bristles for brushing dental pieces or at least one cleaning element for mechanically cleaning inside the oral cavity when the oral care device is inserted into the subject's oral cavity.

The bristles may, for example, be included in a brushing mouthpiece or in a toothbrush head.

The at least one cleaning element may, for example, be included in a dental instrument, e.g. a dental instrument for cleaning or treatment used by a dental practitioner, such as a dentist or an oral hygienist. In this case, the second mode may be employed for cleaning the dental instrument prior to the dental instrument being used for a further subject being seen by the dental practitioner.

Cleaning provided by the bristles or the at least one cleaning element may supplement the inactivation microorganisms and/or viruses provided in the first mode. The sanitizing in the second mode may be particularly advantageous when the oral care device includes such bristles, since spaces between the bristles may provide sites for bacterial and/or fungal growth, and the bristles may render the oral care device more difficult to clean/sanitize between uses without the inactivation delivered by the at least one powered element.

The oral care assembly may comprise a handle member extending from the oral care device. The handle member may be arranged to enable the subject to grip the handle member in order to insert the oral care device into and remove the oral care device from the oral cavity. At least part of the control arrangement may, for example, be housed within the handle member.

In examples in which the oral care assembly includes the holder, the oral care device may, for instance, be held using the holder via the handle member.

According to another aspect there is provided a method of operating an oral care assembly comprising an oral care device, and at least one powered element adapted to inactivate microorganisms and/or viruses, the method comprising: controlling the at least one powered element to operate in a first mode when the oral care device is inserted into a subject's oral cavity, the at least one powered element being controlled in the first mode to inactivate microorganisms and/or viruses within the oral cavity; and controlling the at least one powered element to operate in a second mode when the oral care device is not inserted into the subject's oral cavity, the at least one powered element being controlled by the control arrangement in the second mode to inactivate microorganisms and/or viruses on the oral care device.

Embodiments described herein in relation to the method may be applicable to the oral care assembly, and embodiments described herein in relation to the oral care assembly may be applicable to the method.

### BRIEF DESCRIPTION OF THE DRAWINGS

Examples of the invention will now be described in detail with reference to the accompanying drawings, in which:
FIG. 1 provides a schematic depiction of an oral care assembly according to an example;
FIG. 2 provides a schematic depiction of an oral care assembly according to another example;
FIG. 3 provides a graph of power output versus time for a first mode and a second mode of an exemplary oral care assembly;
FIG. 4 provides a plan view schematic depiction of an oral care device according to a first example;
FIG. 5 provides a graph of electrochemically active saline concentration produced in an electrolysis process versus time;
FIG. 6 provides a graph of cell viability versus electrochemically active saline concentration;
FIG. 7 provides a plan view schematic depiction of an oral care device according to a second example;
FIG. 8 provides a schematic depiction of a first exemplary dielectric barrier discharge assembly;
FIG. 9 provides a schematic depiction of a second exemplary dielectric barrier discharge assembly;
FIG. 10 provides a schematic depiction of a third exemplary dielectric barrier discharge assembly;
FIG. 11 provides a schematic depiction of a fourth exemplary dielectric barrier discharge assembly;
FIG. 12 provides a plan view schematic depiction of an oral care device according to a third example;
FIG. 13 provides a plan view schematic depiction of an oral care device according to a fourth example; and
FIG. 14 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an oral care assembly comprising an oral care device for inserting into a subject's oral cavity. The oral care assembly, e.g. the oral care device, such as a mouthpiece, comprises at least one powered element adapted to inactivate microorganisms, such as bacteria, and/or viruses. The oral care assembly includes a control arrangement for controlling the at least one powered element. The control arrangement is configurable such as to enable switching between a first mode and a second mode. In the first mode, the at least one powered element is controlled by the control arrangement to inactivate microorganisms and/or viruses within the oral cavity when the oral care device is inserted into the oral cavity. In the second mode, the at least one powered element is controlled by the control arrangement to inactivate microorganisms and/or viruses on the oral care device when the oral care device is not inserted into the subject's oral cavity. Further provided is a method of operating the oral care assembly.

Conventional oral care devices for cleaning inside the oral cavity may have plaque removal limitations, and may be challenging to clean after use. In particular, the shape of such oral care devices, and in particular oral care devices, such as mouthpieces, provided with bristles for cleaning the teeth, may provide regions for viruses to reside and/or bacteria to grow between uses.

The present invention is based on the realisation that the inactivation of microorganisms and/or viruses provided by the at least one powered element can improve cleaning inside the oral cavity, and can be further employed for disinfecting, and/or in certain examples (in which the at least one powered element comprises a heating element) for drying, the oral care device when it is not inserted into the oral cavity, e.g. between uses of the oral care assembly. To this end, the control arrangement included in the oral care assembly is configurable, e.g. switchable, to adopt the first mode when the oral care device is inserted into the oral cavity for inactivation of microorganisms, and in particular dental plaque-causing bacteria, and/or viruses therein, and to adopt the second mode when the oral care device is not inserted into the subject's oral cavity, e.g. between uses of the oral care assembly. In the second mode, the at least one powered element is controlled to inactivate microorganisms and/or viruses on the oral care device. This may, for example, assist to limit or prevent bacteria growing and/or viruses residing on the oral care device between uses.

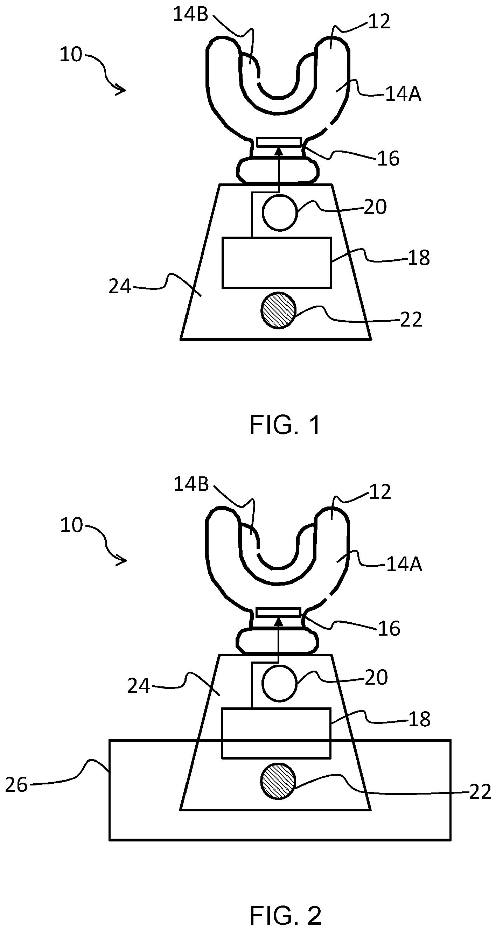

FIG. 1 schematically depicts a mouthpiece assembly 10 according to an example. The mouthpiece assembly 10 comprises a mouthpiece 12 which can be inserted into a subject's oral cavity (not visible). Once inside the subject's oral cavity, the mouthpiece 12 may be used for cleaning, and in particular inactivating bacteria, therein.

FIG. 1 depicts a mouthpiece assembly 10 having a mouthpiece 12 as an illustrative example of an oral care assembly comprising an oral care device. This should not, however, be regarded as being limiting, and the same principles extend to other types of oral care assembly, such as a toothbrush assembly comprising a toothbrush head, e.g. a brush head of a powered toothbrush, as the oral care device, a dental instrument assembly comprising a dental instrument as the oral case device, and so on.

Moreover, whilst described in relation to mouthpieces for cleaning inside the oral cavity, the present disclosure may be applied in respect of mouthpieces more generally, including, for example, alignment mouthpieces.

Whilst not visible in FIG. 1, the mouthpiece 12 may comprise bristles for brushing dental pieces when the mouthpiece 12 is inserted into the subject's oral cavity. The term "dental pieces" in the present context refers to teeth, caps, crowns, dentures, etc.

The mouthpiece assembly 10 may, for example, further comprise a vibrator arrangement (not visible) configured to vibrate the bristles in order to assist brushing of the dental pieces.

The bristles may, for example, protrude from a plurality of surfaces of the mouthpiece 12. In this respect, the mouthpiece 12 may be in the form of a so-called multisurface brushing mouthpiece, which can be in form of a full tooth arch mouthpiece or a partial mouthpiece.

The exemplary mouthpiece 12 shown in FIG. 1 comprises a first part 14A for receiving a first, e.g. upper, set of dental pieces when the mouthpiece 12 is inserted into the subject's oral cavity. The first part 14A may delimit a first recess in which the first set of dental pieces is received.

In examples in which the mouthpiece 12 comprises the bristles, the bristles may contact the first set of dental pieces, e.g. each of the dental pieces of the first set, when the first set of dental pieces is received within the first recess.

As shown in FIG. 1, the mouthpiece 12 may further comprise a second part 14B for receiving a second, e.g. lower, set of dental pieces when the mouthpiece 12 is inserted into the subject's oral cavity. The second part 14B may delimit a second recess in which the second set of dental pieces is received.

In examples in which the mouthpiece 12 comprises the bristles, the bristles may contact the second set of dental pieces, e.g. each of the dental pieces of the second set, when the second set of dental pieces is received within the second recess.

In the non-limiting example shown in FIG. 1, the mouthpiece 12 is configured to receive both the upper and lower sets of dental pieces. The mouthpiece 12 may be regarded as being in the form of a so-called "H-shaped" mouthpiece 12. The mouthpiece 12 may, for example, be configured to provide simultaneous cleaning, e.g. brushing and/or bacterial inactivation, to both the upper and lower sets of dental pieces.

In other non-limiting examples, the mouthpiece 12 may only include one part, and the part may be suitable for receiving the first, e.g. upper, and/or the second, e.g. lower, sets of dental pieces. In other words, the mouthpiece 12 may be regarded as being in the form of a so-called "U-shaped" mouthpiece 12.

The mouthpiece 12 may be formed from any suitable material, for example a polymeric material. At least part of the mouthpiece 12 may, for example, be formed from silicone. Silicone may be suitable due to its low toxicity, and stability, particularly under the inactivation conditions described herein below.

In examples in which the mouthpiece 12 comprises bristles, the bristles may be formed for any suitable material, e.g. silicone, polyamide (e.g. Nylon) or polybutylene terephthalate (PBT). Thus, in a non-limiting example, both the mouthpiece 12 and the bristles are formed from silicone.

The mouthpiece assembly 10, and for example the mouthpiece 12 in particular, comprises at least one powered element 16. The at least one powered element 16 is adapted to inactivate microorganisms and/or viruses. Such inactivation may be implemented by the powered element 16 in any suitable manner, e.g. using electrochemistry, temperature, cold plasma, light and/or electromagnetic irradiation, as will be described in more detail herein below.

The mouthpiece assembly 10 comprises a control arrangement 18. The control arrangement 18 is configurable to control the at least one powered element 16 to operate in a first mode and a second mode.

In the first mode, the at least one powered element 16 is controlled by the control arrangement 18 to inactivate microorganisms and/or viruses within the oral cavity when the mouthpiece 12 is inserted into the oral cavity. The inactivation provided in the first mode may assist to reduce plaque. In particular, the plaque reduction via such inactivation may be superior to brushing alone, e.g. when the mouthpiece 12 includes bristles.

In the second mode, the at least one powered element 16 is controlled by the control arrangement 18 to inactivate microorganisms and/or viruses on the mouthpiece 12 when the mouthpiece 12 is not inserted into the subject's oral cavity. Thus, the same inactivation technology as used in the first mode for reducing plaque may be employed to assist cleaning and disinfecting of the mouthpiece 12 in the second mode, e.g. after each use. This may mean that, for example, the subject or user may not require additional accessories for sanitizing the mouthpiece 12 after use.

Such sanitizing in the second mode may be particularly advantageous in examples in which the mouthpiece 12 includes bristles, since spaces between the bristles may provide sites for bacterial growth and/or for viruses to reside, and the bristles may render the mouthpiece 12 more difficult to sanitize between uses.

The configurability of the control arrangement 18 to select either the first mode or the second mode may be achieved in any suitable manner.

For example, the control arrangement may comprise a switch and/or sensor system 20, 22 configured to determine an indication that the mouthpiece 12 is inserted into or is not inserted into the subject's oral cavity. In this example, the first mode may be triggered based on the determined indication being that the mouthpiece 12 is inserted into the subject's oral cavity. The second mode may be triggered based on the determined indication being that the mouthpiece 12 is not inserted into the subject's oral cavity.

In a non-limiting example, the switch and/or sensor system 20, 22 comprises a first switch 20 and/or a first sensor. While this switch and/or sensor system 20, 22 is shown as part integrated in the device's 12 handle member 24, it could be also part of a (re-attachable) brushing arch.

The first switch 20 may be arranged to be actuated when the mouthpiece 12 is inserted into the subject's oral cavity. For example, the first switch 20 may be arranged at a position in the mouthpiece 12 which is subjected to a pressure, e.g. by the lips of the subject, when the mouthpiece 12 is inserted into the subject's oral cavity. The first switch 20 may be configured to be actuated by the pressure, thereby causing the control arrangement 18 to operate the at least one powered element 16 in the first mode.

Alternatively or additionally, the first sensor may, for example, be configured to detect a characteristic change associated with the mouthpiece 12 being inserted into the subject's oral cavity, such as a change in temperature of part of the mouthpiece 12, and/or an optical change, e.g. lower light intensity, corresponding to insertion of the mouthpiece 12 into the subject's oral cavity.

When both the first switch 20 and the first sensor are included in the control arrangement 18, the actuation of the first switch 20 may assist to confirm that the mouthpiece 12 is, or is being, inserted into the subject's oral cavity as detected by the first sensor. Similarly, detection of the characteristic change by the first sensor may assist to confirm that the mouthpiece 12 is, or is being, inserted into the subject's oral cavity as indicated by actuation of the first switch 20. This may assist to avoid that the control arrangement 18 operates the at least one powered element 16 in the first mode when the mouthpiece 12 is not inserted into the subject's oral cavity.

In a non-limiting example, the switch and/or sensor system 20, 22 alternatively or additionally comprises a second switch 22 and/or a second sensor. This second sensor can be part of the mouthpiece handle member 24 or a (re-attachable) brushing arch.

The second switch 22 may be arranged to be actuated when the mouthpiece 12 is not inserted into the subject's oral cavity. For example, the second switch 22 may be arranged at a position which is contacted by part of a holder (not visible in FIG. 1) which holds the mouthpiece 12 when the mouthpiece 12 is not inserted into the subject's oral cavity, e.g. between uses. The second switch 22 may thus be actuated when the mouthpiece 12 is being held by the holder 26, in other words base station, as shown in FIG. 2, and this may cause the control arrangement 18 to operate the at least one powered element 16 in the second mode.

Alternatively or additionally, the second sensor may, for example, be configured to detect a characteristic change associated with the mouthpiece 12 not being inserted into/removed from the subject's oral cavity, such as a change in temperature of part of the mouthpiece 12, a change in proximity of the second sensor with respect to the holder (when such a holder is included in the mouthpiece assembly 12), and/or an optical change, e.g. higher light intensity, corresponding to removal of the mouthpiece 12 from the subject's oral cavity.

When the second sensor is configured to detect the change in proximity with respect to the holder 26, the second sensor may, for example, include an induction loop detector, and/or a proximity sensor, e.g. a capacitive proximity sensor.

The second sensor may, for instance, include a sensing element, in other words a common sensing element, which is also included in the above-described first sensor.

When both the second switch 22 and the second sensor are included in the control arrangement 18, the actuation of the second switch 22 may assist to confirm that the mouthpiece 12 is not inserted into the subject's oral cavity as detected by the second sensor. Similarly, detection of the characteristic change by the second sensor may assist to confirm that the mouthpiece 12 is not inserted into the subject's oral cavity as indicated by actuation of the second switch 22. This may assist to avoid that the control arrangement 18 operates the at least one powered element 16 in the second mode when the mouthpiece 12 is not inserted into the subject's oral cavity.

The mouthpiece assembly 10 may comprise a handle member 24 extending from the mouthpiece 12, as shown in FIG. 1. In such a non-limiting example, the handle member 24 is arranged to enable the subject to grip the handle member 24 in order to insert the mouthpiece 12 into and remove the mouthpiece 12 from the subject's oral cavity.

At least part of the control arrangement 18 may, for example, be housed within the handle member 24, as shown in FIG. 1. In the depicted example, the first switch 20 and the second switch 22 are also included in the handle member 24, although other positions for these components, e.g. in the mouthpiece 12, may also be contemplated.

When the mouthpiece assembly 10 further comprises the vibrator arrangement configured to vibrate bristles (in examples in which the mouthpiece 12 includes such bristles), at least part of the vibrator arrangement may be housed within the handle member 24.

The mouthpiece assembly 10 may, for example, comprise a reservoir (not visible) for storing a cleaning fluid, at least one nozzle for introducing the cleaning fluid into the mouthpiece 12, and a pump for pumping the cleaning fluid from the reservoir to the mouthpiece 12 via the at least one nozzle.

In such an example, the reservoir may, for instance, be housed within the handle member 24, e.g. together with the at least part of the control arrangement 18 and/or the at least part of the vibrator arrangement.

As briefly mentioned above, the mouthpiece assembly 10 may comprise a holder 26 for the mouthpiece 12 when the mouthpiece 12 is not inserted into the subject's oral cavity. Such a holder 26 is schematically depicted in FIG. 2.

The holder 26 may, for example, be regarded as a base station or a docking station for the mouthpiece 12. In the non-limiting example shown in FIG. 2, the holder 26 holds the mouthpiece 12 and the handle member 24. In particular, the handle member 24 is held by the holder 26, such that the mouthpiece 12 is held using the holder 26 via the handle member 24.

More generally, when the mouthpiece assembly 10 includes the holder 26, the control arrangement 18 may be configured to determine that the mouthpiece 12 is being held using the holder 26, and control the at least one powered element 16 to operate in the second mode based on the determination that the mouthpiece 12 is being held using the holder 26.

The determination that the mouthpiece 12 is being held using the holder 26 may be implemented in any suitable manner, such as using mechanical contacts-based system and/or via closing of an induction closed loop-based system, a proximity sensor, e.g. a capacitive proximity sensor, etc.

The determination may, for instance, be made by the second switch 22 being actuated upon contact being made with part of the holder 26 when the mouthpiece 12 is being held using the holder 26. Actuation of the second switch 22 may cause the control arrangement 18 to operate the at least one powered element 16 in the second mode.

Alternatively or additionally, the holding of the mouthpiece 12 using the holder 26 may be detected via the above-described second sensor, for example the second sensor configured to detect proximity with respect to the holder 26, e.g. comprising an induction loop detector, as previously described.

The control arrangement 18 may, for example, be configured such that the at least one powered element is operated in the second mode only/exclusively when the mouthpiece 12 is held via the holder 26. This may assist to improve safety, since the risk that the subject is exposed to the inactivation conditions (typically higher energy values or longer energy exposure time from light, temperature, plasma etc.) intended for disinfecting the mouthpiece 12 when the mouthpiece 12 is not inserted into the subject's oral cavity is correspondingly lessened or removed.

In an embodiment, the control arrangement 18 may be configured to control the at least one powered element 16 to inactivate microorganisms and/or viruses using a first energy, in other words a first inactivation energy, in the first mode, and using a second energy, in other words a second inactivation energy, in the second mode. The first inactivation energy and the second inactivation energy may be different from each other. Thus, the respective inactivation energies of the first and second modes may be tailored according to whether or not the mouthpiece 12 is inserted into the subject's oral cavity.

In the first mode, the first inactivation energy may be configured for inactivation of microorganisms and/or viruses but balancing additional requirements relating to the safety and comfort of the subject in whose oral cavity the mouthpiece 12 is inserted. When the mouthpiece 12 is not inserted into the oral cavity, the second inactivation energy may be configured for inactivation of microorganisms and/or viruses on the mouthpiece, and the additional requirements when the mouthpiece 12 is inserted into the oral cavity may not apply, or at least apply to a lesser extent.

The second inactivation energy may, for instance, be higher than the first inactivation energy. The higher second inactivation energy may assist inactivation of microorganisms and/or viruses on the mouthpiece in the second mode. The lower first inactivation energy may balance user comfort and safety requirements with effective in-mouth inactivation.

The control arrangement 18 may be configured to control the at least one powered element 16 to deliver a first power, in other words a first inactivation power, for a first duration in the first mode, and to deliver a second power, in other words a second inactivation power, for a second duration in the second mode.

The second inactivation power may, for example, be greater than the first inactivation power. Alternatively or additionally, the second duration may be longer than the first duration.

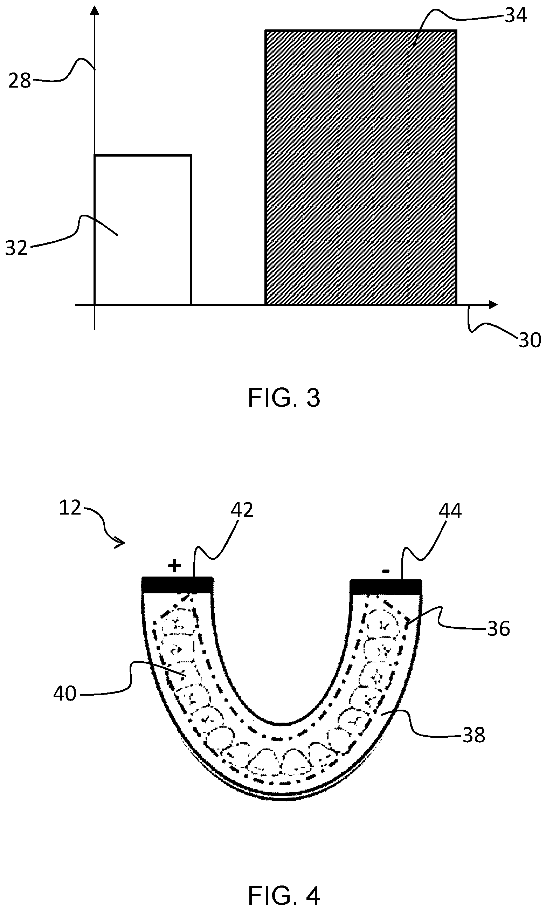

FIG. 3 provides a graph of power output 28 of the at least one powered element 16 versus time 30 for a first mode 32 and a second mode 34 of an exemplary mouthpiece assembly 10.

The plot shown in FIG. 3 may be regarded as an exemplary energy profile of the at least one powered element 16, which may generate, for example, at least one of heat energy, electrochemical energy, plasma or reactive ion energy, and light energy, as will be described in more detail herein below. It is also noted that the box-shaped profile shown in FIG. 3 is not intended to be limiting, and other suitable energy profiles/shapes can also be considered, such as triangular with angled up/down ramps, pulsed profiles with different duty cycles, and so on.

In the exemplary profile shown in FIG. 3, the first inactivation power in the first mode 32 is lower than the second inactivation power in the second mode 34. Moreover, in this particular example the first duration of the first mode 32 is shorter than the second duration of the second mode. Thus, FIG. 3 graphically represents an example in which the at least one powered element 16 is operated to deliver a higher inactivation energy in the second mode 34 than in the first mode 32.

FIG. 4 provides a plan view of an exemplary mouthpiece 12. The mouthpiece 12 comprises a recess delimited by a fluid permeable portion 36. A body 38, e.g. a silicone body 38, of the mouthpiece 12 surrounds the fluid permeable portion 36. The recess receives a set of dental pieces 40, e.g. teeth, therein. The mouthpiece 12 shown in FIG. 4 may be regarded as having a U-shaped design, although the mouthpiece 12 may alternatively have the two-part 14A, 14B, H-shaped, design described above in relation to FIG. 1. Where appropriate, the following description of the at least one powered element 16 may be applied to at least one, e.g. each, of the first part 14A and the second part 14B when the mouthpiece 12 comprises such an H-shaped design.

In an embodiment, the at least one powered element 16 comprises a pair of electrodes 42, 44: an anode 42 and a cathode 44. In this case, the control arrangement 18 is configured to apply a voltage across the pair of electrodes 42, 44. An antimicrobial may thus be electrochemically generated from an aqueous solution between the electrodes 42, 44 and/or from a material included in at least one of the electrodes 42, 44.

Applying the voltage via the mouthpiece 12 may thus induce an electrochemical reaction with available species which can result in the production of antimicrobials, such as sodium hypochlorite.

Such antimicrobials may assist to inactivate, e.g. destroy, bacteria causing dental plaque in the first mode. In particular, the electrochemically generated antimicrobials may inactivate, e.g. kill, and/or dissolve biofilm on the dental pieces 40. The necessary treatment time, in other words the first duration of the first mode, may be at least partly determined by the concentration of the aqueous solution and the magnitude of the current and voltage.

The electrochemically-generated antimicrobials may further assist to disinfect the mouthpiece 12 in the second mode.

The mouthpiece 12 may, for example, be placed in a container (not visible) containing the aqueous solution, e.g. comprising sodium chloride, when the mouthpiece 12 is not inserted into the subject's oral cavity. The container may, for example, be included in the holder 26 described above in relation to FIG. 2.

Particular additives, e.g. metals, may, for example, be added to the container to assist the electrochemistry and/or antimicrobial activity.

The aqueous solution employed for the second mode, e.g. the aqueous solution added to the container, may be, for example, more concentrated than that employed for the first mode. This may assist to improve the efficacy of and/or speed up the inactivation of microorganisms and/or viruses on the mouthpiece in the second mode.

More generally, the aqueous solution may comprise ions for increasing the conductivity of the aqueous solution. When the voltage is applied across the electrodes, positively charged ions in the solution will move to the cathode 44 and the negatively charged ions will move to the anode 42.

Provided that the potential difference between the anode 42 and the cathode 44 is sufficient, electrochemical reactions will occur. The aqueous solution may, for example, comprise or consist of sodium chloride solution, and the voltage may be sufficient to electrolyse the sodium chloride to produce chlorine.

In a non-limiting example, the voltage is between 2.19 V and 2.25 V, e.g. 2.20 V, in the first mode, and optionally also in the second mode. The voltage may be at least 2.19V in the second mode. A voltage greater than or equal to 2.19 V may be sufficient to oxidise chloride ions to chlorine; hypochlorous acid from dissolution of chlorine in the aqueous solution at least partly defining the antimicrobial in this case. The upper limit of 2.25 V may mean that the electrochemical antimicrobial generation is safely implemented inside the subject's oral cavity.

As shown in FIG. 4, the electrodes 42, 44 may be incorporated in the mouthpiece 12, and a current may flow due to a power source being connected to the electrodes 42, 44. Such a power source (not visible in FIG. 4) may be included in the control arrangement 18.

For example, the electrodes 42, 44 may be connected via a metal clamp connector to a battery pack (not visible). Such a battery pack may, for example, be located extra-orally, for example within the handle member 24, or on a table or hung around the neck using a necklace, and so on. A wire or wires which is or are relatively small/thin may protrude into the oral cavity in order to connect the power source to the electrodes 42, 44.

In other examples, one of the electrodes 42, 44 at which antimicrobial production takes place is provided in the mouthpiece 12, while the counterelectrode 44, 42 may be defined by a wire (not shown) in the mouthpiece 12. Such a wire may, for instance, be provided in a different part 14A, 14B of the mouthpiece 12 relative to the part 14B, 14A in which the electrode 42, 44 effecting antimicrobial production is provided.

Returning to the example shown in FIG. 4, the anode 42 and the cathode 44 are positioned at respective ends of the mouthpiece 12. Fluid stream is permitted between the fluid permeable portion 36, defining the recess in which the teeth 40 are received, and the body 38 of the mouthpiece 12.

Whilst not visible in the plan view provided in FIG. 4, one or both of the electrodes 42, 44 may be prevented by the body 38 of the mouthpiece 12 from contacting tissue in the oral cavity, thereby to avoid unintended exposure of such tissue to the voltage applied across the electrodes in the first mode. The inner curved part and the outer curved part of the mouthpiece 12 may be closed to avoid such direct tissue contact with the current.

The control arrangement 18 may, for instance, be configured to reverse the polarity of the voltage applied across the electrodes 42, 44 one or more times, e.g. at predetermined times, during the first mode.

In at least some examples, the antimicrobial may be formed at the anode 42 and OH⁻ ions may be generated at the cathode 44. The OH⁻ ions may assist to counteract/neutralise cariogenic acids formed by plaque bacteria, and the antimicrobial, e.g. hypochlorous acid, may assist to inactivate the plaque bacteria.

By reversing the polarity of the voltage across the electrodes 42, 44 one or more times during the first mode, both cariogenic acid counteraction and bacterial inactivation may be provided at/close to both electrodes 42, 44.

The mouthpiece 12 may be designed to incorporate different electrode materials and/or in such a way as to minimise the distance between the electrodes 42, 44 for efficient ion transfer. In this respect, and as an alternative to the example shown in FIG. 4, one of the electrodes 42, 44 may be included in the first part 14A of the mouthpiece 12 shown in FIGs. 1 and 2, and the other of the electrodes 44, 42 may be included in the second part 14B of the mouthpiece 12.

In such an example, the control arrangement 18 may, for instance, be configured to implement the above-described reversal of polarity of the voltage across the electrodes 42, 44 in order to provide bacterial inactivation and cariogenic acid counteraction sequentially in both parts 14A, 14B of the mouthpiece 12.

Sodium chloride, NaCl, may be present in natural saliva. Thus, the subject's saliva may provide the electrolyte, and a source of chloride ions for antimicrobial production. Alternatively or additionally, the subject could be asked to rinse with a sodium chloride solution having a concentration higher than natural saliva prior to the mouthpiece 12 being inserted into the subject's oral cavity, and the pair of electrodes 42, 44 of the at least one powered element 16 being operated by the control arrangement 18 in the first mode.

Such a sodium chloride solution could, alternatively or additionally, be injected, e.g. pumped, into the mouthpiece 12 from the above-described reservoir housed within the handle member 24 via the at least one nozzle. The sodium chloride solution stored in the reservoir may thus be used for electrochemical disinfection in the first mode and/or the second mode.

The following reactions may occur when the aqueous solution comprises sodium chloride:
Anode:

   2Cl⁻ ↔ Cl₂ + 2e⁻
Anode (competing)

   H₂O ↔ 2H⁺ + 0.5O₂ + 2e⁻

Hypochlorous acid generation may occur relatively quickly because Cl₂ dissolves in water:

Cl₂ + H₂O → HClO + HCl

Exact dissociation depends on local pH:

HClO ↔ OCl⁻ + H⁺

Cathode:

2H_{z}O + 2e⁻ ↔ 2OH⁻ + H₂

The hypochlorous acid generated from the electrolysis of the sodium chloride solution, in other words saline, in this case may at least partly define the antimicrobial.

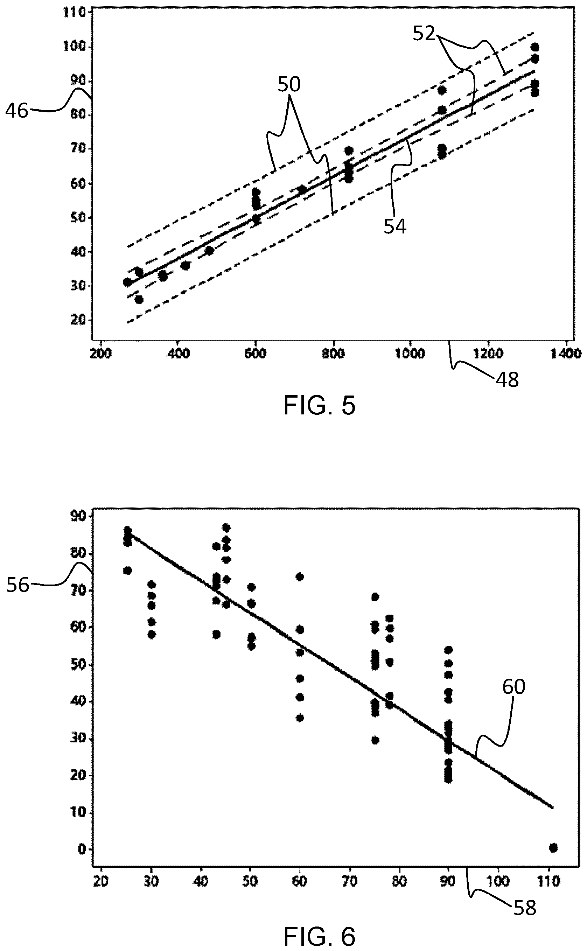

FIG. 5 provides a graph of electrochemically active saline (ECAS) concentration 46 in mg/L produced in an electrolysis process versus time 48 in seconds using a lab scale electrochemical reactor. The lines 50 denote 95% prediction interval, the lines 52 denote 95% confidence interval, and the line 54 is a linear regression: ECAS concentration (mg/L) = 14.13 + 0.05976 x time.

For safety reasons, the control arrangement 18 may be configured to ensure that the current cannot be too high. In the non-limiting example shown in FIG. 5, the voltage across the electrodes was 2.2V, and the current was 0.05A. A sodium chloride, in other words saline, solution having a concentration of 0.9% (physiological saline) may produce antimicrobials after about 5 minutes, as shown.

FIG. 6 provides a graph of cell viability (normalised) 56 versus electrochemically active saline concentration 58 in ppm. In particular, biofilm mass was recorded after 3.5 days treatment with different concentrations of ECAS. Data were fitted using a linear function 60. Each data point represents an individual viability measurement of an independent biofilm which was treated with ECAS twice daily, for two minutes, for 3.5 days.

Referring to FIGs. 5 and 6, it is evident that ECAS, e.g. when used on a daily basis, may be used to control dental plaque. When performing the electrolysis for longer periods of time, e.g. for about 15 minutes, the ECAS concentration will be higher and thus more effective in killing and removing biofilm/dental plaque.

In a non-limiting example, the antimicrobial may be electrochemically generated from a material included in at least one of the electrodes 42, 44.

The material may, for instance, be at least one metal selected from zinc, tin, copper and silver. For example, the anode 42 may be made of, or coated with, such a material. Zinc, for example, is established as being safe and effective in oral antimicrobial formulations.

At the anode 42, the metal may be electrochemically oxidised to form metal cations. Such metal cations may at least partly define the antimicrobial. In, for example, the case of zinc, Zn²⁺ may be produced at the anode 42 rather than O₂ and H⁺. Zn²⁺ ions may, similarly to tin, copper and silver ions, provide effective antimicrobial action, as an alternative to or in addition to the above-described chlorine/hypochlorous acid antimicrobial. The latter may also potentially be formed in smaller amounts relative to the metal, e.g. Zn²⁺, ions.

The above-identified competing water electrolysis reaction taking place at the anode 42 carries the risk that the environment near the electrode 42 gets more acidic and unintentionally promotes caries formation in the enamel. Using an anode 42 comprising the above-described metal, e.g. zinc, may further assist by minimising or preventing such potentially harmful acid formation.

It is also reiterated that OH⁻ ions produced at the cathode 44 may assist to increase the pH to counteract cariogenic activity of bacterial acids. Moreover, a relatively high local pH, e.g. >10, adjacent the biofilm may also assist to weaken the plaque, and thereby make it easier to remove, for example by brushing, e.g. using the mouthpiece 12 itself when it comprises bristles.

The metal may also, particularly in the case of zinc, assist to reduce the voltage required to obtain the electrochemical reaction. For a zinc, or zinc-coated, anode 42, for instance, an electrochemical reaction may occur at 0.1 V. Reducing the voltage in this manner may assist to reduce the risk of side effects and may also assist to increase the efficacy of the active agent/antimicrobial generation.

For example, a 4 mA current was observed to flow when a voltage of 1 V was applied across electrodes 42, 44 where the anode 42 was zinc, but no current was observed when the same voltage was applied across electrodes 42, 44 where the anode 42 was platinum. In the former case, sufficient zinc ions were generated to prevent growth of an in vitro biofilm.

It is noted that tin, copper, and silver may produce, in common with zinc, relatively highly active antimicrobial metal ions at the anode 42, but may require higher voltages than zinc.

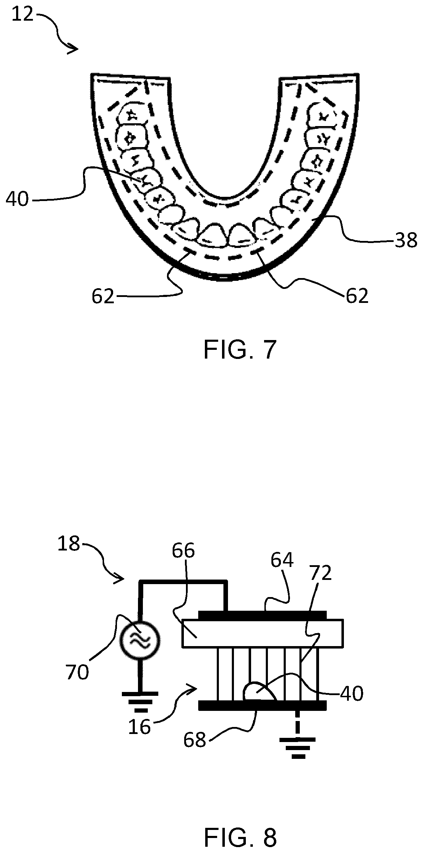

In an embodiment, the at least one powered element 16 comprises a heating and/or cooling element 62, and the control arrangement 18 is configured to control the heating and/or cooling element 62 to provide heating at least to a surface of the oral cavity in the first mode, and to provide heating and/or cooling to the mouthpiece 12 in the second mode. The surface may be, for example, a surface of one or more dental pieces 40 within the oral cavity. FIG. 7 provides a schematic depiction of a mouthpiece 12 having such a heating and/or cooling element 62.

In the non-limiting example shown in FIG. 7, a plurality of such heating and/or cooling elements 62 are arranged to provide heating and/or cooling to the surfaces, in this case to the surfaces of the dental pieces 40.

As shown in FIG. 7, the heating and/or cooling elements 62 may be located, e.g. mounted, within the body 38, e.g. at or towards the inner part, of the mouthpiece 12. This may assist to lessen the risk of the cheek and/or tongue of the subject being burned during operation of the mouthpiece assembly 10 in the first mode.

The heating and/or cooling provided by the element 62 may be sufficient for inactivation of microorganisms, e.g. bacteria and/or fungi, and/or viruses. The temperature resulting from the heating and/or cooling may, for instance, assist to damage bacteria and inactivate bacterial enzymes and toxins. Such temperature-based bacterial inactivation may be usefully applied to inactivate oral bacteria in the first mode, and to inactivate bacteria on the mouthpiece 12 in the second mode.

It is also noted that this temperature-based inactivation may be an alternative or in addition to the above-described embodiment in which an antimicrobial is generated electrochemically via the pair of electrodes 42, 44, and/or the further inactivation techniques described herein below.

The heating and/or cooling element 62 may, for example, comprise or be defined by a Peltier element. Peltier elements may assist to provide relatively rapid temperature adjustment, thereby to minimise the risk of causing damage to the centre of the dental piece 40, e.g. tooth. Other types of element 62 may also be contemplated, for example a resistive heating element for heat-based microbial inactivation.

In an embodiment, the control arrangement 18 is configured to control the heating and/or cooling element 62 to provide pulses of heating at least to the surface of the oral cavity in the first mode. Such pulsing may assist the surface to reach a sufficiently high temperature for bacterial inactivation relatively quickly, whilst also minimising the risk of damage to the centres of the dental pieces 40, e.g. teeth.

For example, the control arrangement 18 may be configured to pass a pulsed electrical current through one or more resistive heating elements 62 incorporated in the mouthpiece 12. Thus, the requisite temperature for bacterial inactivation, which may, for example, be greater than 40°C, may be reached relatively rapidly.

The control arrangement 18 may be configured such that a maximum temperature at the surface, e.g. tooth surface, of the oral cavity is 60°C or less when the control arrangement 18 is controlling the heating and/or cooling element(s) 62 to provide heating thereto in the first mode. This may assist to reduce the risk of discomfort or injury to the subject during operation of the mouthpiece assembly 10 in the first mode.

The temperature at the surface of the dental pieces 40 may, for instance, not exceed this maximum temperature of 60°C when the control arrangement 18 is configured to control the heating and/or cooling element 62 to provide the above-described pulses of heat.

When using a Peltier element as the heating and/or cooling element 62, it is reiterated that the Peltier element can be controlled by the control arrangement 18 to decrease the temperature relatively rapidly, thereby decreasing the risk of damaging the centre of the tooth. For example, the combination of the Peltier element with the above-described pulses of heat may assist to ensure that the area between the mouthpiece 12 and the dental piece 40 heats up without the centres of the dental pieces 40, e.g. teeth, increasing too much in temperature.

For inactivation in the second mode, the mouthpiece 12 may, for example, be placed in a container containing a liquid, e.g. the liquid at least partially covering the mouthpiece 12. Such a container may, for example, be included in the holder 26 described above in relation to FIG. 2. The heating and/or cooling element(s) 62, e.g. Peltier elements, included in the mouthpiece 12 may be used to heat up the liquid, e.g. water.

The heating provided, for example, by the heating and/or cooling element(s) 62 in the second mode may, for example, be to a higher temperature and/or for a longer duration than the heating provided in the first mode, as generally described above in relation to FIG. 3.

The heating provided in the second mode may also advantageously assist to dry the rinsed/cleaned mouthpiece 12 after use. This may, for example, assist to limit or avoid growth of fungus on the mouthpiece 12.

It is noted that some additional cleaning may, for instance, be necessary to clean the mouthpiece 12 completely, e.g. such as to remove residual deposits.

In an embodiment, the at least one powered element 16 comprises a first electrode 64, and a second electrode 68. The mouthpiece 12 also comprises a dielectric barrier 66. The control arrangement 18 is configured to apply a voltage across the first and second electrodes 64, 68 to generate a dielectric barrier discharge between the dielectric barrier 66 and the second electrode 68.

The dielectric barrier discharge may generate a cold plasma, and the cold plasma may effect inactivation, e.g. by killing bacteria relatively quickly. One or more by-products may also generated by the dielectric barrier discharge, e.g. hydroxide, nitric oxide and/or ozone, and may also have an antimicrobial effect.

When the mouthpiece 12 is inserted into the subject's oral cavity, at least one surface in the oral cavity may be treated with the cold plasma and/or the above-identified one or more by-products in order to inactivate, e.g. kill, bacteria on the at least one surface during operation in the first mode.

During operation in the second mode, the cold plasma and/or the above-identified one or more by-products may be generated on the surface of the inside of the mouthpiece 12, which may inactivate, e.g. kill, bacteria on the mouthpiece 12.

It is also noted that this dielectric barrier discharge-derived inactivation may be an alternative or in addition to the above-described embodiments in which an antimicrobial is generated electrochemically via the pair of electrodes 42, 44, the heating and/or cooling element(s) 62, and/or the further inactivation techniques using light described herein below.

The dielectric barrier 66 may be formed of any suitable dielectric material, e.g. a polymer, such as a plastic.

Relatively large surface areas can be treated with dielectric barrier discharge devices, which generate plasmas from first and second electrodes 64, 68 between which a dielectric barrier 66 limits the discharge current. Such devices may typically be operated in the kV ignition voltage range, and the frequency can go up to several MHz. This may result in a power consumption of up to several watts per dm² electrode area. These parameters may be at least partly dependent on the distance between the first and second electrodes 64, 68 and the surface area of the first and second electrodes 64, 68. Several exemplary arrangements are depicted in FIGs. 8 to 10.

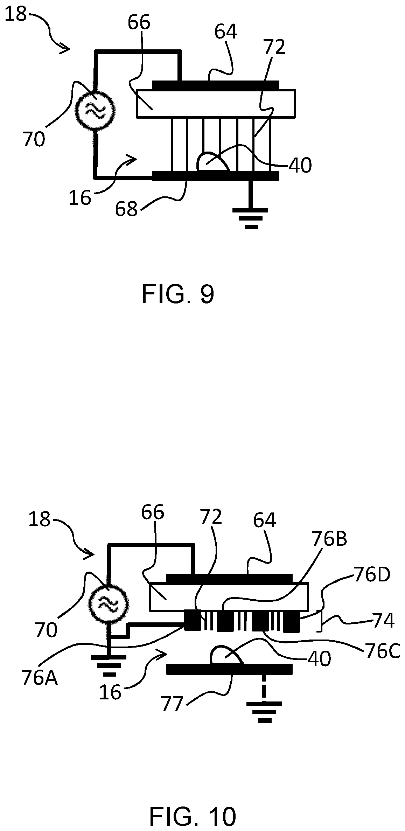

FIGs. 8 and 9 schematically depict exemplary arrangements for providing a volume barrier discharge. In such examples, the oral cavity, e.g. the dental pieces 40, may be directly exposed to the generated plasma.

Such direct exposure to plasma, which may also be referred to as directly applied dielectric barrier discharge, may involve direct flow of current to the treatment area. Charged particles may impact one or more surfaces in the oral cavity in the first mode, and of the mouthpiece in the second mode.

The discharges for directly applied dielectric barrier discharge may be of a filamentary nature which may lead to a degree of non-uniformity in the surface treatment. Particularly in cases where the distance between the surface and dielectric barrier is not uniform, the surface treatment may be relatively inhomogeneous.

As shown in FIG. 8, a voltage supply 70 may apply a voltage, e.g. a high A.C. voltage, and the voltage supply 70 is connected to the first electrode 64. The voltage supply 70 may be included in the control arrangement 18 of the mouthpiece assembly 10. In this example, the voltage supply 70 and the second electrode 68 are connected to ground. The lines 72 between the dielectric barrier 66 and the second electrode 68 represent the (cold) plasma.

FIG. 9 shows a similar arrangement to that shown in FIG. 8, but with the voltage supply 70 connected to the first electrode 64 and the second electrode 68, with the latter being also connected to ground.

In an embodiment, the second electrode comprises a conductor 74 comprising conductive areas 76A, 76B, 76C, 76D spaced apart from each other, wherein the dielectric barrier discharge is generated in the spaces between the conductive areas 76A, 76B, 76C, 76D. In this case, the dielectric barrier 66 is interposed between the first electrode 64 and the conductor 74.

The conductor 74 may take any suitable form, such as a mesh, a structured carbon coating, and so on. The material, e.g. a metal, carbon, etc., of the conductor 74 may, for instance, be relatively thin and/or flexible to facilitate incorporation into the mouthpiece 12.

A non-limiting example of such an arrangement is shown in FIG. 10, which shows a surface discharge at the surface of the dielectric barrier 66 in the spaces between the conductive areas 76A, 76B, 76C, 76D of the conductor 74.

In the example shown in FIG. 10, the conductor 74 is grounded, and the second electrode further comprises a grounded conductor 77.

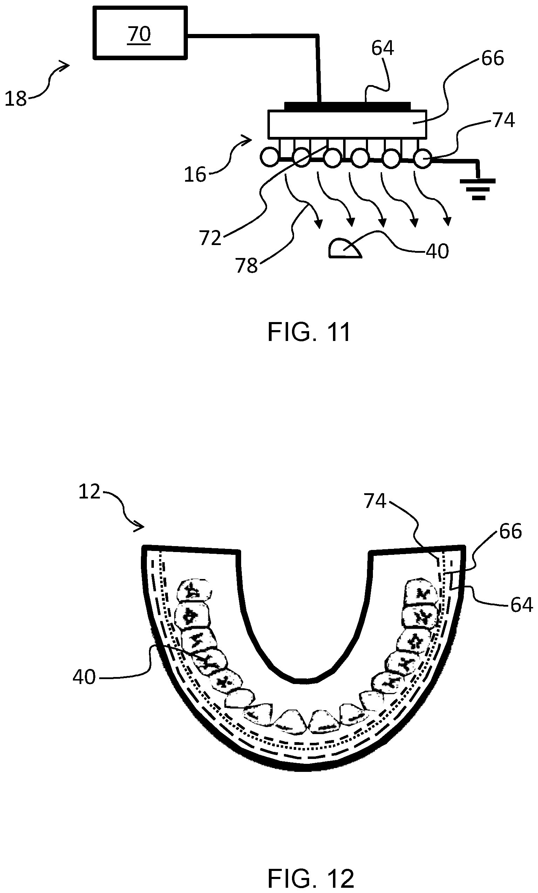

Another non-limiting example of such a surface discharge arrangement is shown in FIG. 11. In this particular example, the conductor 74 comprises, or is in the form of, a metallic mesh. Plasma 72 is generated in the spaces between the wires defining the mesh. The arrows 78 are intended to represent diffused inactivation species moving towards one or more surfaces of the oral cavity, e.g. one or more surfaces of dental pieces 40, during operation in the first mode.

In the examples shown in FIGs. 10 and 11, the discharges may be regarded as being applied indirectly, meaning that the plasma filaments may not be in direct contact with the surface being treated, e.g. the surface of a dental piece 40 in the first mode. In this configuration the plasma may be contained near the dielectric barrier 66, and the above-described species created in the plasma may be transported, as represented in FIG. 11 by the arrows 78, to the site of treatment via, for example, forced or natural convection. This can be termed a "surface micro discharge" arrangement.

More generally, the above-described surface barrier discharge processes may operate using different gas compositions ranging from noble gases, air, water vapour and other gas mixtures.

Regarding safety of the subject, particularly during operation in the first mode, the duration of plasma application in the mouth may only be for a limited period of time, e.g. less than 10 seconds, in order to effect inactivation whilst minimising risk to the subject, e.g. in relation to ozone exposure.

The surface barrier discharge arrangement shown, for example, in FIGs. 10 and 11, may implemented in the mouthpiece assembly 10 by including the above-described conductor 74. In the non-limiting example shown in FIG. 12, the mouthpiece 12 comprises the first electrode 64 which extends around the set of dental pieces 40. The mouthpiece 12 further comprises the conductor 74 which extends around the set of dental pieces 40. The conductor 74 is closer to the dental pieces 40 than the first electrode 64. The dielectric barrier 66 is interposed between the first electrode 64 and the conductor 74, as shown.

In this example, the species created by the surface plasma may be transported to the dental pieces 40, thereby to inactivate bacteria on the dental pieces 40 in the first mode. Similarly, the species may be transported across the mouthpiece 12, when the mouthpiece 12 is not inserted into the subject's oral cavity, thereby to inactivate bacteria on the mouthpiece 12 in the second mode.

Whilst not shown in FIG. 12, the mouthpiece assembly 10 may be alternatively configured for volume barrier discharge. For example, the voltage, e.g. the high A.C. voltage, may be applied to at least one electrically conductive piece of the mouthpiece, e.g. an inner electrode, covered with the dielectric barrier, e.g. a standard plastic material. Alternatively, an electrically conducting mouthpiece 12 may be covered with the dielectric barrier.

In an embodiment, the at least one powered element 16 comprises at least one light source 80 for emitting light for inactivating bacteria. In this case, the at least one light source 80 is arranged to emit the light into the oral cavity in the first mode, and emit the light towards at least part of the mouthpiece 12 in the second mode.

The at least one light source 80 may assist to lower plaque levels in the oral cavity when the mouthpiece assembly 10 is operated in the first mode. Moreover, irradiation of the mouthpiece 12 using the at least one light source 80 in the second mode may make the mouthpiece 12 more hygienic for subsequent uses, and as a consequence assist to improve oral health.

The at least one light source 80 may comprise or consist of any suitable lighting element, such as a solid state lighting element, e.g. a light emitting diode and/or a laser source.

The at least one light source 80 may be configured to emit light of any suitable wavelength for inactivating microorganisms and/or viruses, such as blue, violet, and ultraviolet (UV) wavelengths (in a continuous or pulsed light mode). Such light wavelengths are known to inactivate microorganisms, and bacteria in particular, and/or viruses.

In a non-limiting example, the at least one light source 80 may be configured to emit infra-red light for the purpose of inactivating microorganisms and/or viruses. The infra-red emitting at least one light source 80 may, for instance, be regarded as an alternative to the heating provided by the heating and/or cooling element described above. An infra-red light source may provide relatively rapid heating to the surface(s) of the oral cavity on which the light is incident in the first mode, and the at least part of the mouthpiece 12 in the second mode. Moreover, in the first mode, the infra-red light may also be used to assist healing of gum inflammation.

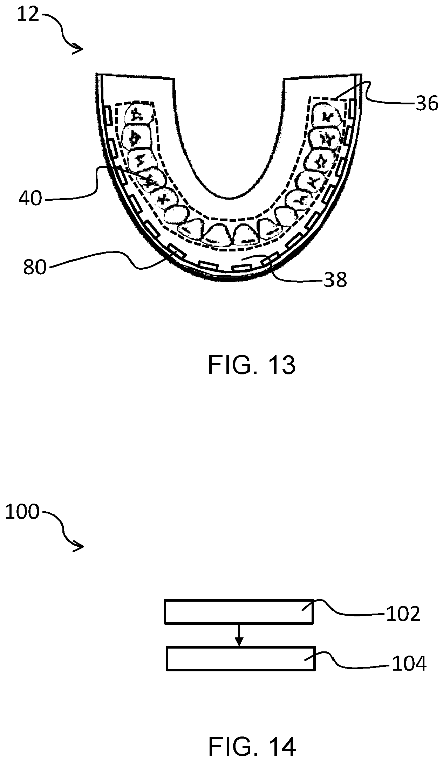

In the exemplary mouthpiece 12 shown in FIG. 13, the at least one light source 80 comprises a plurality of light sources 80, e.g. light emitting diodes and/or laser sources. When the mouthpiece 12 is inserted into the oral cavity, the light sources 80 emit light towards the dental pieces 40, as shown. When the mouthpiece 12 is not inserted into the oral cavity, the light sources 80 may emit light, in the second mode, across the interior of the mouthpiece 12, e.g. towards an opposing surface or opposing surfaces of the mouthpiece 12.

The at least one lighting source 80 may, for example, be embedded in the body 38 of the mouthpiece, and the body 38 may be optically transmissive at least for the wavelength(s) of light emitted by the at least one light source 80 for bacterial inactivation.

In other examples, irradiation provided by the at least one light source 80 may be provided to the oral cavity, e.g. to the dental pieces 40, in the first mode, and to the at least part of the mouthpiece 12 in the second mode via one or more light guides. In such an example, the at least one light source 80 may be external to the mouthpiece 12, and may, for example, be provided in the handle member 24 or in the holder 26.

In examples in which the mouthpiece 12 comprises bristles, the light from the at least one light source 80 may irradiate the mouthpiece 12, including the bristles in the second mode. This may assist to make the mouthpiece 12 and bristles more hygienic for subsequent uses. The at least one light source 80 may, for example, be arranged to emit the light through the bristles.

In a non-limiting example, at least some of the bristles may define light guides via which light from the at least one light source 80 may be provided to the dental pieces 40 in the first mode, and to the at least part of the mouthpiece 12 in the second mode.

Alternatively or additionally, the at least one light source 80 and the control arrangement 18 may, for example, be configured such that a different wavelength and/or intensity of light is emitted towards the mouthpiece 12 in the second mode than the wavelength and/or intensity of light emitted towards the oral cavity in the first mode. For example, a higher light intensity and/or shorter wavelengths, e.g. UV-C light, may be used to enhance disinfection efficacy in the second mode. Such higher intensity and/or shorter wavelength light may not be employed in the first mode for safety reasons.

FIG. 14 provides a flowchart of a method 100 according to an example. The method 100 is of operating an oral care assembly comprising an oral care device, and at least one powered element adapted to inactivate microorganisms and/or viruses. The oral care assembly may, for instance, be any of the exemplary mouthpiece assemblies 10 described above.

The method 100 comprises controlling 102 the at least one powered element to operate in a first mode when the mouthpiece is inserted into a subject's oral cavity. The at least one powered element is controlled in the first mode to inactivate microorganisms and/or viruses within the oral cavity, as previously described.

The method 100 further comprises controlling 104 the at least one powered element to operate in a second mode when the mouthpiece is not inserted into the subject's oral cavity. The at least one powered element may thus be switched from the first mode to the second mode, or from the second mode to the first mode. The at least one powered element is controlled by the control arrangement in the second mode to inactivate microorganisms and/or viruses on the mouthpiece, as previously described.

The above-described control arrangement 18 can be implemented in numerous ways, with software and/or hardware, to perform the various required functions. A processor is one example of a control arrangement 18 which employs one or more microprocessors that can be programmed using software (e.g., microcode) to perform the functions. The control arrangement 18 may, however, be implemented with or without employing a processor, and also may be implemented as a combination of dedicated hardware to perform some functions and a processor, e.g. one or more programmed microprocessors and associated circuitry, to perform other functions.

Examples of controller components that may be employed in various embodiments of the present disclosure include, but are not limited to, conventional microprocessors, application specific integrated circuits (ASICs), and field-programmable gate arrays (FPGAs).

In some examples, the control arrangement 18 is associated with one or more storage media such as volatile and non-volatile computer memory such as RAM, PROM, EPROM, and EEPROM. The storage media can be encoded with one or more programs that, when executed on one or more processors and/or controllers, perform the required functions. Various storage media may be fixed within the control arrangement 18 or may be transportable, such that the one or more programs stored thereon can be loaded into the control arrangement 18.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. An oral care assembly (10) comprising:
an oral care device (12) for inserting into a subject's oral cavity;
at least one powered element (16) adapted to inactivate microorganisms and/or viruses; and
a control arrangement (18) for controlling the at least one powered element, wherein the control arrangement is configurable to control the at least one powered element to operate in:
a first mode when the oral care device is inserted into the subject's oral cavity, the at least one powered element being controlled by the control arrangement in the first mode to inactivate microorganisms and/or viruses within the oral cavity; and
a second mode when the oral care device is not inserted into the subject's oral cavity, the at least one powered element being controlled by the control arrangement in the second mode to inactivate microorganisms and/or viruses on the oral care device.

2. The oral care assembly (10) according to claim 1, comprising a holder (26) for the oral care device (12) when the oral care device is not inserted into the subject's oral cavity, wherein the control arrangement (18) is configured to:
determine that the oral care device is being held using the holder; and
control the at least one powered element (16) to operate in the second mode based on the determination that the oral care device is being held using the holder.

3. The oral care assembly (10) according to claim 1 or claim 2, wherein the control arrangement (18) is configured to control the at least one powered element (16) to inactivate microorganisms and/or viruses using a first energy in the first mode, and using a second energy in the second mode, wherein the first energy and the second energy are different from each other.

4. The oral care assembly (10) according to claim 3, wherein the second energy is higher than the first energy.

5. The oral care assembly (10) according to any of claims 1 to 4, wherein the at least one powered element (16) comprises a pair of electrodes (42, 44), the control arrangement (18) being configured to apply a voltage across the pair of electrodes, and wherein the voltage is sufficient to electrochemically generate an antimicrobial from an aqueous solution between the electrodes and/or from a material included in at least one of the electrodes.

6. The oral care assembly (10) according to claim 5, wherein the voltage is sufficient to electrolyse the aqueous solution to produce the antimicrobial; optionally wherein the solution comprises sodium chloride, and the antimicrobial comprises chlorine.

7. The oral care assembly (10) according to any of claims 1 to 6, wherein the at least one powered element (16) comprises a heating and/or cooling element (62), and wherein the control arrangement (18) is configured to control the heating and/or cooling element to provide heating and/or cooling to a surface of the oral cavity in the first mode, and to provide heating and/or cooling to the oral care device in the second mode; optionally wherein the control arrangement is configured to control the heating and/or cooling element to provide heating to the oral care device in the second mode such as to evaporate moisture on the oral care device.

8. The oral care assembly (10) according to claim 7, wherein the control arrangement (18) is configured to control the heating and/or cooling element (62) to provide pulses of heating to the surface of the oral cavity in the first mode.

9. The oral care assembly (10) according to claim 7 or claim 8, wherein the control arrangement (18) is configured such that a maximum temperature at the surface to which heating is applied is 60°C or less.

10. The oral care assembly (10) according to any of claims 1 to 9, wherein the at least one powered element (16) comprises a first electrode (64) and a second electrode (68, 74), the oral care device (12) comprises a dielectric barrier (66), and the control arrangement (18) comprises a voltage supply (70), the dielectric barrier and the control arrangement being configured such that a dielectric barrier discharge is generated by application of a voltage across the first and second electrodes by the voltage supply.

11. The oral care assembly (10) according to claim 10, wherein the second electrode comprises a conductor (74) comprising conductive areas (76A, 76B, 76C, 76D) spaced apart from each other, the dielectric barrier discharge being generated in the spaces between the conductive areas.

12. The oral care assembly (10) according to any of claims 1 to 11, wherein the at least one powered element (16) comprises at least one light source (80) for emitting light for inactivating microorganisms, wherein the at least one light source is arranged to emit the light into the oral cavity in the first mode, and emit the light towards at least part of the oral care device in the second mode.

13. The oral care assembly (10) according to any of claims 1 to 12, wherein the oral care device (12) comprises bristles for brushing dental pieces or at least one cleaning element for mechanically cleaning inside the oral cavity when the oral care device is inserted into the subject's oral cavity.

14. The oral care assembly (10) according to any of claims 1 to 13, comprising a handle member (24) extending from the oral care device (12), the handle member being arranged to enable the subject to grip the handle member in order to insert the oral care device into and remove the oral care device from the oral cavity; optionally wherein at least part of the control arrangement (18) is housed within the handle member.

15. A method (100) of operating an oral care assembly comprising an oral care device, and at least one powered element adapted to inactivate microorganisms and/or viruses, the method comprising:
controlling (102) the at least one powered element to operate in a first mode when the oral care device is inserted into a subject's oral cavity, the at least one powered element being controlled in the first mode to inactivate microorganisms and/or viruses within the oral cavity; and
controlling (104) the at least one powered element to operate in a second mode when the oral care device is not inserted into the subject's oral cavity, the at least one powered element being controlled by the control arrangement in the second mode to inactivate microorganisms and/or viruses on the oral care device.
